(19) **Europäisches Patentamt**

**European Patent Office**

**Office européen des brevets**

(11) **EP 0 775 360 B1**

(12) **EUROPÄISCHE PATENTSCHRIFT**

(45) Veröffentlichungstag und Bekanntmachung des Hinweises auf die Patenterteilung:
**17.07.2002 Patentblatt 2002/29**

(21) Anmeldenummer: **95926833.5**

(22) Anmeldetag: **01.08.1995**

(51) Int Cl.$^7$: **G11B 20/18**

(86) Internationale Anmeldenummer:
**PCT/DE95/00997**

(87) Internationale Veröffentlichungsnummer:
**WO 96/04653 (15.02.1996 Gazette 1996/08)**

(54) **SIGNALVERARBEITUNGSVERFAHREN UND -ANORDNUNG ZUM ERSETZEN NICHTKORRIGIERBARER BLÖCKE IN EINEM EMPFÄNGER FÜR BLOCKWEISE KODIERTE AUDIOSIGNALE**

SIGNAL-PROCESSING METHOD AND DEVICE FOR SUBSTITUTING NON-CORRECTABLE BLOCKS IN A RECEIVER FOR BLOCK-CODED AUDIO SIGNALS

PROCEDE ET SYSTEME DE TRAITEMENT DE SIGNAUX PERMETTANT DE REMPLACER DES BLOCS NE POUVANT PAS ETRE CORRIGES DANS UN RECEPTEUR, DESTINES A DES SIGNAUX AUDIO CODES EN BLOC

(84) Benannte Vertragsstaaten:
**DE ES FR GB IT**

(30) Priorität: **02.08.1994 DE 4427351**

(43) Veröffentlichungstag der Anmeldung:
**28.05.1997 Patentblatt 1997/22**

(73) Patentinhaber: **SIEMENS AKTIENGESELLSCHAFT**
**80333 München (DE)**

(72) Erfinder: **LECKSCHAT, Dieter**
**D-46399 Bocholt (DE)**

(56) Entgegenhaltungen:
**WO-A-85/05723            US-A- 5 339 321**

- **PATENT ABSTRACTS OF JAPAN vol. 018 no. 195 (E-1533) ,5.April 1994 & JP,A,05 347594 (MATSUSHITA ELECTRIC IND CO LTD) 27.Dezember 1993,**
- **PATENT ABSTRACTS OF JAPAN vol. 017 no. 050 (E-1314) ,29.Januar 1993 & JP,A,04 263528 (NIPPON TELEGR & TELEPH CORP) 18.September 1992,**

**Beschreibung**

Die Erfindung betrifft ein Signalverarbeitungsverfahren gemäß dem Oberbegriff des Patentanspruches 1 und eine Signalverarbeitungsanordnung gemäß dem Oberbegriff des Patentanspruches 8.

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet. Die von der Nachrichtenquelle erzeugte Nachricht wird von dem Sendegerät über einen Nachrichtenkanal dem Empfangsgerät übertragen, das die empfangene Nachricht anschließend an die Nachrichtensenke abgibt. Die Nachrichtenverarbeitung und -übertragung kann dabei in einer bevorzugten Übertragungsrichtung oder in beiden Übertragungsrichtungen (Duplexbetrieb) erfolgen.

"Nachricht" ist ein übergeordneter Begriff, der sowohl für den Sinngehalt (Information) als auch für die physikalische Repräsentation (Signal) steht. Signale können z. B.

(1) Bilder,
(2) gesprochene Wörter,
(3) geschriebene Wörter,
(4) verschlüsselte Wörter oder Bilder

repräsentieren. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Die vorliegende Erfindung bezieht sich vorrangig auf die Übertragung von Audio-Nachrichten (z. B. Sprach- oder Musiknachrichten etc.). Sie kann aber auch auf andere Nachrichten, wie z. B. entsprechend aufbereitete Video-Nachrichten, angewendet werden.

Als mögliche Signalformen für ein Audio-Nachrichtensystem treten entweder kontinuierliche Signale (reine Analogsignale) oder eine Mischung aus kontinuierlichen und diskontinuierlichen Signalen unter Verwendung von A/D- bzw. D/A-Wandlern auf. Für die Funktionen "Senden" und "Empfangen" sind jeweils nachrichtentypspezifische Geräte erforderlich. Die Frage, welche dieser Geräte letztlich eingesetzt werden, hängt unter anderem auch davon ab, welcher Nachrichtenkanal in dem Audio-Nachrichtensystem zugrundegelegt wird. Die vorliegende Erfindung bezieht sich daher vorrangig auf Telekommunikationssysteme, die einen drahtlosen Telekommunikationskanal aufweisen. Telekommunikationssysteme mit einer derartigen Struktur sind beispielsweise Schnurlostelefone nach dem DECT-Standard (Digital European Cordless Telecommunication; vgl. **(1)** European Telecommunication Standard; prETS 300 175-1...9, 10/1992, Teil 1 bis 9, ETS-Institute 06921 Sofia Antipoles, France; **(2)** Nachrichtentechnik Elektronik 42 (Jan./Feb. 1992), No.1, Berlin; U. Pilger: "Struktur des DECT-Standards"; Seiten 23 bis 29; **(3)** Philips Telecommunication Review: "DECT, Universal Cordless Access System"; Vol. 49, Nr. 3, 09/1991, Seiten 68 bis 73) oder Mobilfunktelefone nach dem GSM-Standard (Groupe Spéciale Mobile oder Gobal Systems for Mobile Communication; vgl. Informatik Spektrum, Springer Verlag Berlin, Jg. 14, 1991, No. 3, Seiten 137 bis 152, "Der GSM-Standard - Grundlage für digitale europäische Mobilfunknetze").

Das DECT-Schnurlostelefon und das GSM-Mobilfunktelefon sind Audio-Nachrichtensysteme, in denen blockweise codierte Audiosignale - z. B, nach dem TDMA- bzw. CDMA-Verfahren (Time Division Multiple Access bzw. Code Division Multiple Access) codierte Signale - verarbeitet werden. Die mit diesen Telefonen übertragene Nachricht besteht gemäß der vorstehenden Definition von Nachrichtentypen in der Regel aus einer Mischung von kontinuierlichen und diskontinuierlichen Signalen. Diese Signalmischung entsteht dabei durch die Verwendung von Analog/Digital-bzw. Digital/Analog-Wandlern.

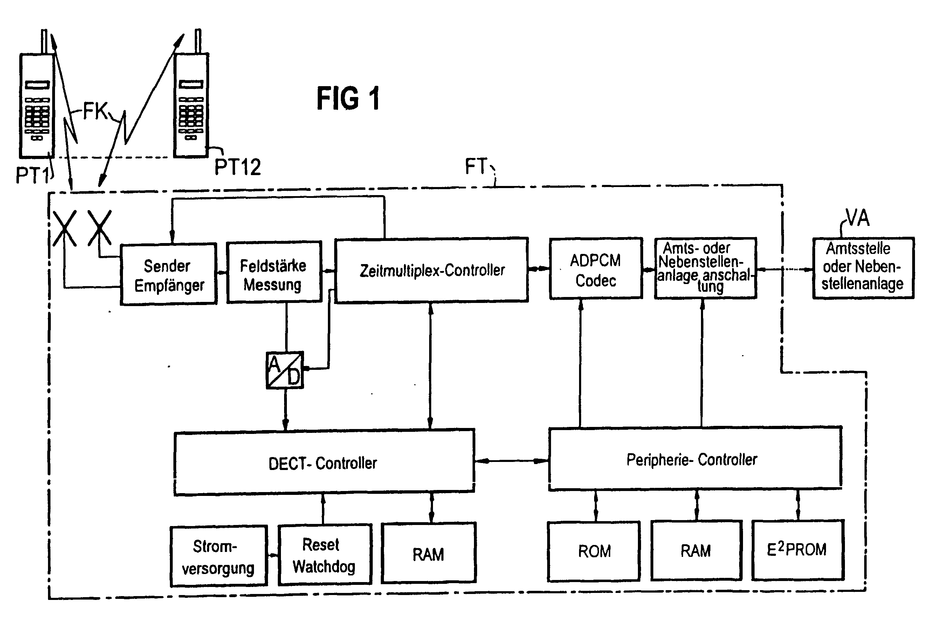

Figur 1 zeigt ein DECT-Schnurlostelefon mit einer Schnurlos-Basisstation FT (Fixed Termination), der für die Schnurlos-Telekommunikation über einen Funkkanal FK maximal zwölf Schnurlos-Mobilteile PT1...PT12 (Portable Termination) zugeordnet sind. Schnurlos-Basisstationen mit einem solchen Aufbau sind unter der Produktbezeichnung "Gigaset 952" - vgl. DE-Z: Funkschau 12/1993, Seiten 24 und 25; "Digitale Freiheit - Gigaset 952: Das erste DECT-Telefon"; Autor: G. Weckwerth - 1993 auf dem Markt eingeführt worden. Dieser Aufbau ist im wesentlichen auch aus der DE-Z: Funkschau 10/1993; Seiten 74 bis 77; Titel: "Digital kommunizieren mit DECT-DECT-Chipsatz von Philips"; Autor: Dr. J. Nieder und der WO 94/10812 (Figur 1 mit der dazugehörigen Beschreibung) vorbekannt.

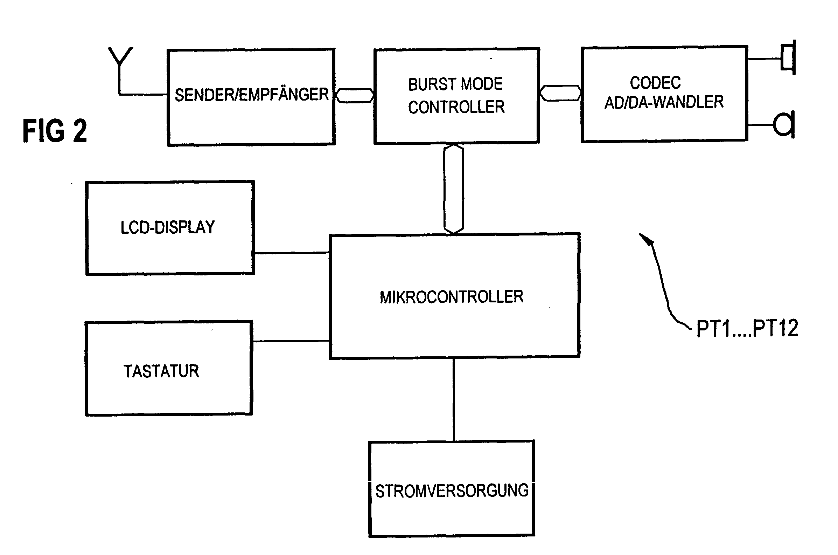

Figur 2 zeigt den prinzipiellen Aufbau des DECT-spezifischen Schnurlos-Mobilteils PT1...PT12, wie es für die Übertragung von Sprachnachrichten in dem Schnurlostelefon verwendet wird. Schnurlos-Mobilteile mit einem solchen Aufbau sind ebenfalls unter der Produktbezeichnung "Gigaset 952" - vgl. DE-Z: Funkschau 12/1993, Seiten 24 und 25; "Digitale Freiheit - Gigaset 952: Das erste DECT-Telefon"; Autor: G. Weckwerth - 1993 auf dem Markt eingeführt worden. Dieser Aufbau ist im wesentlichen auch aus der DE-Z: Funkschau 10/1993; Seilen 74 bis 77; Titel: "Digital kommunizieren mit DECT-DECT-Chipsatz von Philips"; Autor: Dr. J. Nieder und der WO 94/10812 (Figur 1 mit der dazugehörigen Beschreibung) vorbekannt.

Für die Übertragung von Sprach- und/oder Musiksignalen (Audiosignale) mit dem DECT-Schnurlostelefon werden blockorientierte Codierverfahren (z. B. TDMA-Verfahren) eingesetzt, um zum einen eine Korrelation zwischen zeitlich aufeinanderfolgenden Signalabschnitten zur Datenreduktion auszunutzen und/ oder zum anderen eine blockorientierte Fehlersicherung durch Parity-Bits vorzunehmen. Ist die Übertragung der digital codierten Signale gestört, so treten zusehends Bitfehler auf, die bei geringer Fehlerrate durch die dem digital codierten Signal zugeordneten Redundanzmechanismen ausgeglichen werden können. Erreichen die Bitfehlerraten jedoch größere Werte, so ist eine Fehlerkorrektur nicht mehr möglich und ein gesamter Signalblock wird folglich als fehlerhaft erkannt und ausgewiesen. Im Umgang mit solchen als fehlerhaft erkannten und ausgewiesenen Signalblöcken gibt es empfängerseitig mehrere Möglichkeiten.

Eine erste, aus der WO 94/10769 bekannte Möglichkeit besteht darin, den entsprechenden, als fehlerhaft erkannten Signalblock "stumm zu schalten", d. h. den Code beispielsweise durch eine Folge von Nullwerten entsprechend zu verändern. Diese Methode wird heute bei digitalen DECT-Schnurlostelefonen, wie dem Gigaset 952, angewendet.

Eine zweite Möglichkeit der Fehlerkorrektur besteht darin, davon auszugehen, daß der auftretende Fehler nur gering sein wird. Hierbei gilt es aber zu unterscheiden, ob anhand des Algorithmus erkennbar ist, wie wichtig die jeweils gestörten Bits sind. Bei einer herkömmlichen linearen Codierung würde beispielsweise ein gestörtes niederwertiges Bit (LSB = Least Significant Bit) kaum hörbare Fehler produzieren, während ein fehlerhaft gesetztes höherwertiges Bit (MSB = Most Significant Bit) starke Sprünge im Übertragungssignal und damit knackartige Störungen erzeugen würde. Indes ist nicht in allen Fällen ohne weiteres erkennbar, wie stark die einzelnen zu erwartenden Störungen sein werden.

Ein ganz anderer Weg bei der Fehlerkorrektur von gestörten Audiosignalen wird in den Druckschriften:

(1) A. Papoulis: "A new algorithm in Spectral Analysis and Band-Limited Extrapolation"; IEEE Transactions on Circuits and Systems, Band 22 (9), Seiten 735 ff., 1975 und
(2) R. Sottek: "Modelle zur Signalverarbeitung im menschlichen Gehör"; Dissertation am Institut für elektrische Nachrichtentechnik, RWTH Aachen 1993

vorgeschlagen. Aus den genannten Druckschriften ist jeweils ein Verfahren bekannt, bei dem durch Störungen hervorgerufene Signalfehler des Audiosignales durch eine Interpolation des Signals verschleiert werden. Nachteilig bei dieser Methode ist zum einen der hohe technische Aufwand, der unter Umständen die komplette Rechenleistung eines heute marktüblichen digitalen Signalprozessors (DSP = Digital Signal Processor) verlangt und zum anderen die algorithmische Verzögerung des Signals notwendig macht, falls über die Fourier-Transformation im Frequenzbereich gearbeitet wird. Diese Verzögerung wäre beispielsweise bei der Telefonie, insbesondere der Schnurlostelefonie nicht tolerierbar.

Aus der DE-41 11 131 A1 ist ein Verfahren zum Übertragen digitalisierter Tonsignale bekannt, bei dem zum Verarbeiten der Signale ein mit dem Signal korreliertes Substitutionssignal generiert und zwischengespeichert wird, mindestens ein erster fehlerhaft übertragener Signalabschnitt im Signal ermittelt wird, der erste Signalabschnitt des Signales durch das Substitutionssignal ersetzt wird, substitutionsbedingte Artefakte des Signales unterdrückt werden.

Die der Erfindung zugrundeliegende Aufgabe besteht darin, die Übertragungsqualität von blockweise codierten Audiosignalen in Audio-Nachrichtensystemen beim Auftreten von Übertragungsfehlern derart zu verbessern, daß der Bedarf an Rechenleistung und somit die Kosten minimal sind sowie insbesondere keine zusätzliche Verzögerung und Beeinträchtigung des zu übertragenden Audiosignales auftritt.

Diese Aufgabe wird

1) ausgehend von dem im Oberbegriff des Patentanspruches 1 definierten Signalverarbeitungsverfahren durch die in dem kennzeichnenden Teil des Patentanspruches 1 angegebenen Merkmale und
2) ausgehend von der im Oberbegriff des Patentanspruches 8 definierten Signalverarbeitungsanordnung durch die in dem kennzeichnenden Teil des Patentanspruches 8 angegebenen Merkmale

gelöst.

Die der Erfindung zugrundeliegende Idee besteht darin, durch Übertragungsfehler entstandene Pausen im Audiosignal durch ein zuvor generiertes pausenspezifisches Substitutionssignal zu ersetzen und zu filtern.

Das Generieren des Substitutionssignals geschieht im einfachsten Fall dadurch, daß der einem aktuellen Signalabschnitt des Audiosignals unmittelbar vorausgegangene Signalabschnitt zwischengespeichert wird und für den Fall, daß der aktuelle Signalabschnitt gestört ist, in die durch die Störung entstandene Lücke eingesetzt wird. Diese Vorgehensweise bietet sich alleine schon deshalb an, weil bei Audiosignalen (Musikoder Sprachsignalen) eine starke Korrelation zwischen Signalabschnitten besteht, die zeitlich dicht beieinander liegen.

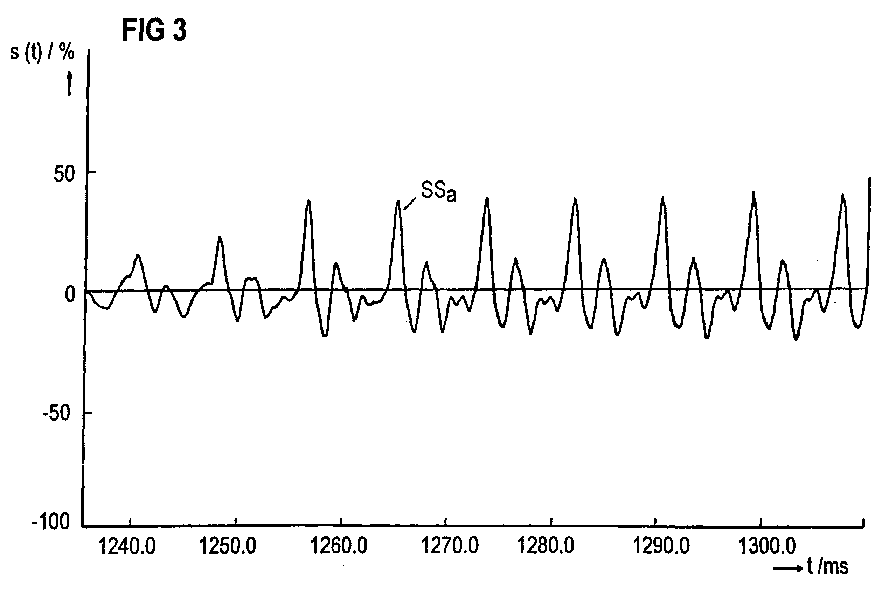

Der Grund hierfür liegt darin, daß die Lauterzeugungsmechanismen (z. B. Saitenschwingung bei der Musikerzeugung, Bewegungen im Vokaltrakt bei der Spracherzeugung etc.) eine gewisse mechanische Trägheit aufweisen. Vergleicht man aufeinanderfolgende Signalabschnitte des Audiosignals in der Größenordnung von 10 bis 20 ms, so stellt man fast immer eine sehr große Ähnlichkeit im Zeitsignal fest (Figur 3).

Alternativ ist es auch möglich, das Generieren des pausenspezifischen Substitutionssignals zunächst über mehrere, dem aktuellen Signalabschnitt des Audiosignals zeitlich sukzessiv vorausgegangene Signalabschnitte zu erstrecken und zwischenzuspeichern und dann - bei einem gestörten aktuellen Signalabschnitt - im Zuge einer durch Vergleich des Signalabschnittendes des zuletzt fehlerfrei übertragenen Signalabschnittes mit einer am besten zu diesem Signalabschnittende passenden Subsitutionssignalanfang des zwischengespeicherten Subsitutionssignals vorgenommenen optimierten Stetigkeitsanpassung die durch die Störung entstandene Lücke im Audiosignal zu schließen.

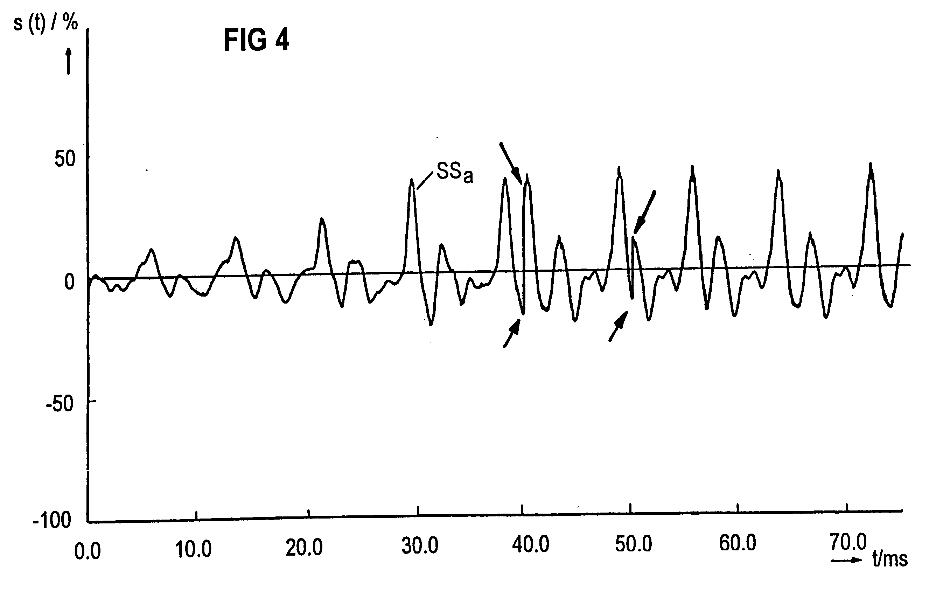

Mit dem Ersetzen der fehlerhaften Signalabschnitte durch vorausgegangene Signalabschnitte nach einer der vorstehend beschriebenen Methoden tritt jedoch (auch bei der Methode mit der optimierten Stetigkeitsanpassung) das Problem auf, daß an den Einfügungspunkten wegen der unbekannten Phasenlage von Signalabschnitten des Audiosignales Unstetigkeitsstellen im Audiosignal entstehen können(Figur 4). Die einfache Bestimmung einer Grundfrequenz des Audiosignals, um etwa den einzufügenden Signalabschnitt an den vorhergehenden Abschnitt stetig anzupassen, ist bei Sprachsignalen in der Telefonie nicht möglich, weil diese Sprachgrundfrequenz - die im Frequenzspektrum zwischen 160 und 200 Hz liegt - durch ein Hochpaßfilter (Hochpaßfilterung bei 300 Hz) herausgefiltert wird. Andererseits ist ein stetiges Aneinandersetzen von Signalabschnitten nur dann möglich, wenn neben der spektralen Verteilung auch die Phasen der einzelne Frequenzanteile bekannt sind. Dies wiederum setzt jedoch eine laufende Spektralanalyse - z. B. nach Fourier - voraus, die jedoch wegen des bereits erwähnten rechnerischen Aufwands nicht in Frage kommt.

Die vorstehend angesprochenen Unstetigkeitsstellen führen mitunter dazu, daß knackartige Störungen in der Audiosignalübertragung zu hören sind. Zur Unterdrückung dieser hochfrequenten Störungen, d. h. Unterdrückung höherer Spektralanteile in der Fouriertransformierten der Sprungfunktion, wird bevorzugt ein Tiefpaßfilter verwendet. Im Zeitbereich hat das Tiefpaßfilter eine glättende Wirkung, während im Frequenzbereich unnatürliche Anteile hoher Frequenz abgemildert werden. Die damit einhergehende Beeinträchtigung des zu übertragenden Audiosignales ist tolerierbar, wenn das vorzugsweise als Digitalfilter ausgebildete Tiefpaßfilter eine nicht zu starke Beschneidung des Audiosignales vornimmt. Die Abstimmung des Filters ist daher als Komprcmiß zu sehen, der unter psychoakustischen Gesichtspunkten optimiert wird. Darüber hinaus ist zu fordern, daß das Filter störungsfrei ein- und ausgeschaltet werden kann.

Vorteilhafte Weiterbildungen der Erfindung sind in den Unteransprüchen angegeben.

Ein Ausführungsbeispiel der Erfindung wird anhand der Figuren 3 bis 9 erläutert. Es zeigen:

Figur 3 ein in mehrere Zeitabschnitte eingeteiltes Sprachsignal des Vokals "a",

Figur 4 das Auftreten von Unstetigkeitsstellen im Sprachsignal beim Ersetzen von Zeitabschnitten (Pfeile),

Figur 5 ausgehend von der Figur 2 die modifizierte Topologie des Schnurlos-Mobilteils PT zur Verbesserung der Übertragungsqualität von TDMA-spezifischen (Time Division Multiple Access), DECT-Sprachsignalen in DECT-Schnurlostelefonen beim Auftreten von Übertragungsfehlern,

Figur 6 den Aufbau eines einfachen Filters zur Unterdrückung von substitutionsbedingten Artefakten des Sprachsignales,

Figur 7 die gemessene Übertragungsfunktion eines realen Tiefpaß-Filters (Rekursivfilter 1. Ordnung nach Figur 6),

Figur 8 ein über drei (10 ms)-Perioden gestörtes DECT-Sprachsignal,

Figur 9 das bezüglich der drei (10 ms)-Perioden bearbeitete DECT-Sprachsignal nach Figur 8.

Figur 3 zeigt den zeitlichen Verlauf eines Sprachsignals $SS_a$ für den Vokal "a", das in mehrere (10 ms)-Signalabschnitte eingeteilt ist. Bei dieser zeitlichen Einteilung des Sprachsignals $SS_a$ wird die Ähnlichkeit von benachbarten Zeitabschnitten sichtbar. Diese Korrelation zwischen Teilstücken des Sprachsignales $SS_a$, die dicht beieinander liegen, ist dadurch gegeben, daß die Lauterzeugungsmechanismen (Bewegungen im Vokaltrakt) eine gewisse mechanische Trägheit aufweisen.

Figur 4 zeigt ausgehend von dem Sprachsignal $SS_a$ für den Vokal "a" nach Figur 3 das gleiche Sprachsignal $SS_a$ für eine andere Zeitachse. Im Zeitbereich zwischen 40 und 50 ms ist bei dem Sprachsignal nach Figur 4 ein Zeitabschnitt durch Kopieren des vorausgegangenen Zeitabschnittes ersetzt worden. Aufgrund dieser Substitution sind an den mit den Pfeilen markierten Stellen Unstetigkeitsstellen entstanden, die bei der elektroakustsichen Signalumwandlung als knackartige Störungen zu hören sind.

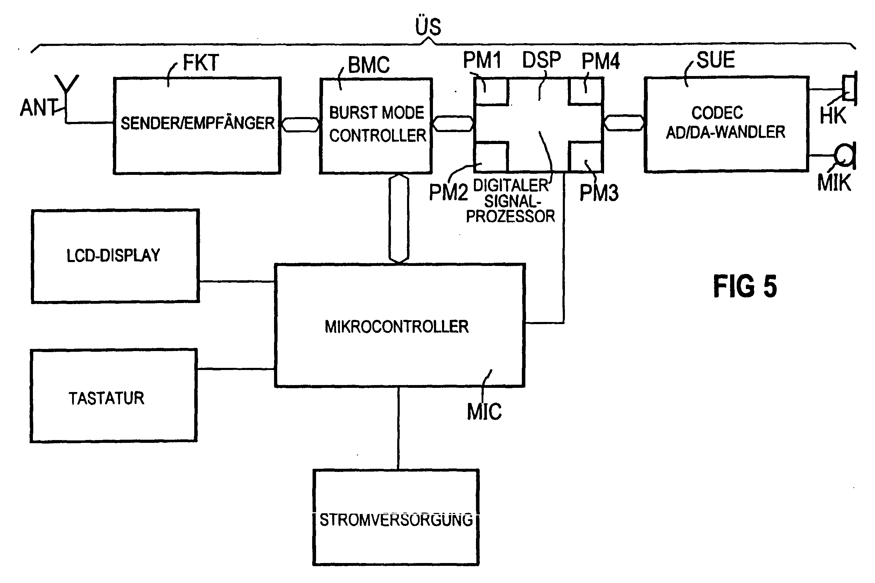

Figur 5 zeigt ausgehend von der Figur 2 die modifizierte Topologie des Schnurlos-Mobilteils PT zur Verbesserung der Übertragungsqualität von TDMA-spezifischen (Time Division Multiple Access), DECT-Sprachsignalen in DECT-Schnurlostelefonen beim Auftreten von Übertragungsfehlern. Die Übertragungsfehler treten häufig in Grenzbereichen bei der Funknachrichtenübertragung der DECT-Schnurlostelefone auf, so daß es in diesen Bereichen zu DECT-spezifischen Burst-- bzw. Informationsverlusten kommt. Das modifizierte Schnurlos-Mobilteil PT weist dazu einen digitalen Signalprozessor DSP auf, der auf einer Übertragungsstrecke ÜS des Schnurlos-Mobilteils PT - von einer Antenne ANT mit einem nachgeschalteten Funkteil FKT (Sender/Empfänger) zu einer Hörkapsel HK in Empfangsrichtung bzw. von einem Mikrofon MIK zur Antenne ANT in Senderichtung - zwischen einer Signalsteuerungseinrichtung BMC (Burst Mode Controller) und einer Signalumformungseinrichtung SUE (Codec, AD/DA-Wandler) angeordnet ist. Der digitale Signalprozessor DSP wird dabei von einer mobilteilindividuellen Funktions-/Ablaufsteuerungseinrichtung MIC (DECT-Mikrocontroller) gesteuert. Damit der digitale Signalprozessor DSP die zur Verbesserung der Übertragungsqualität des auf der genannten Übertragungsstrecke ÜS teilweise gestört übertragenen DECT-Sprachsignale verbessern kann, sind dem digitalen Signalprozessor DSP mehrere Programmodule,

（1）ein erstes Programmodul PM1 zum Generieren und Zwischenspeichern eines mit dem Sprachsignal korrelierten Substitutionssignales,
（2）ein zweites Programmodul PM2 zum Ermitteln mindestens eines ersten fehlerhaft übertragenen Signalabschnittes im Sprachsignal,
（3）ein drittes Programmodul PM3 zum Ersetzen des ersten Signalabschnittes des Sprachsignals durch das Substitutionssignal und
（4）ein viertes Programmodul PM4 zum Unterdrükken von substitutionsbedingten Artefakten des DECT-Sprachsignales,

zugeordnet. Während die ersten drei Module PM1, PM2, PM3 unter der Steuerungshoheit der Funktions-/ Ablaufsteuerungseinrichtung MIC die angesprochenenen sprachsignalspezifischen Besonderheiten erfassen und auswerten, werden mit dem vierten Programmodul PM4 die bei der Auswertung entstehenden Unstetigkeitsstellen im DECT-Sprachsignal digital weggefiltert. Das vierte Programmodul PM4 ist daher in seiner bevorzugten Ausführungsform nichts anderes als ein Digitalfilter. Durch das Digitalfilter werden die sprungartigen Unstetigkeitsstellen an den Ansatzstellen der zeitlichen Signalabschnitte geglättet.

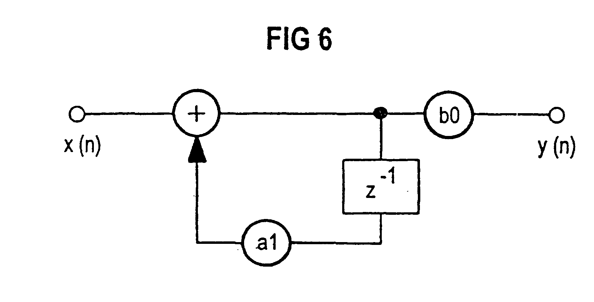

Figur 6 zeigt den Aufbau eines von dem Programmodul PM4 nach Figur 5 realisierten Digitalfilters. In seiner einfachsten Form ist dieses Digitalfilter als Rekursivfilter erster Ordnung (IIR-Filter; Infinite Impulse Response-Filter) ausgebildet. Das Rekursivfilter weist eine Filterfunktion H $(\omega)$ auf, die

（1）bei einer Kreisfrequenz $\omega=0$ den Funktionswert

$$H(\omega=0) = b_0 * 1/(1 - a_1)$$

und

（2）bei einer Kreisfrequenz $\omega=\pi$ den Funktionswert

$$H(\omega=\pi) = b_0 * 1/(1 + a_1)$$

aufweist. Dadurch ist eine eindeutige Dimensionierung des Filters möglich. Liegt der Koeffizient $a_1$ in dem Wertebereich zwischen 0 und 1 ($0<a_1<1$), so handelt es sich bei dem Rekursivfilter um ein Tiefpaßfilter. Mit der Beziehung $b_0 = (1 - a_1)$ und einem Wert $a_1 = 0,8$ ergeben sich für $\omega=0$, $\omega=\pi/8$ und $\omega = \pi$ folgende Filterfunktionswerte: $H(\omega=0) = 1$, $H(\omega=\pi/8) = 0,5$ und $H(\omega=\pi) = 0,111$.

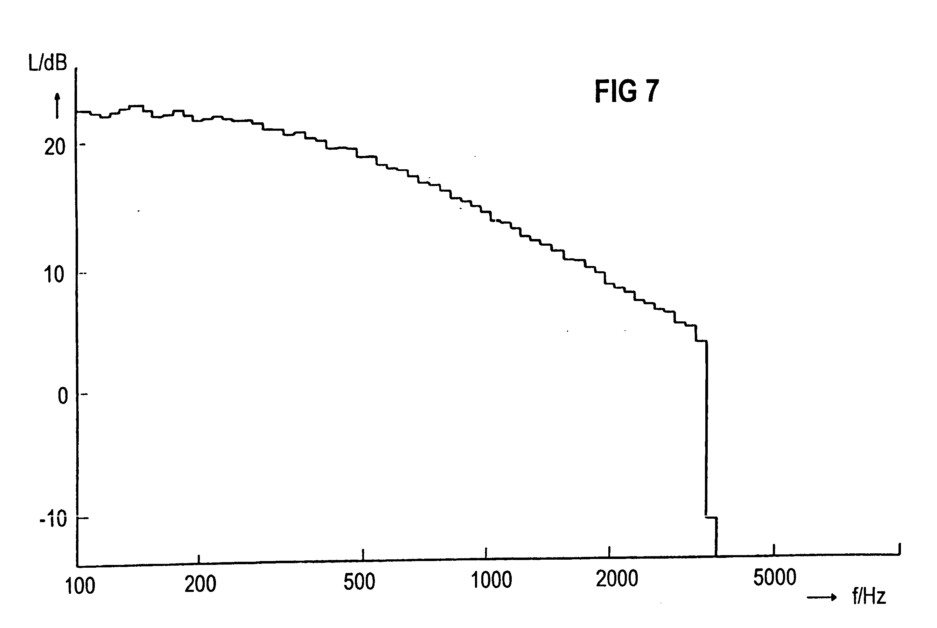

Figur 7 zeigt die an einem realen Tiefpaß-Filter erster Ordnung gemessene Übertragungsfunktion. Die sich dabei ergebende Bandbegrenzung bei 4 kHz ergibt sich aus der Bandbreite des mit dem DECT-spezifischen Schnurlos-Mobilteil PT bei einer Abtastraste von 8 kHz übertragenen Sprachsignals. Bei den höchsten Frequenzen bewirkt dieses Filter eine Absenkung des Signals um knapp 20 dB.

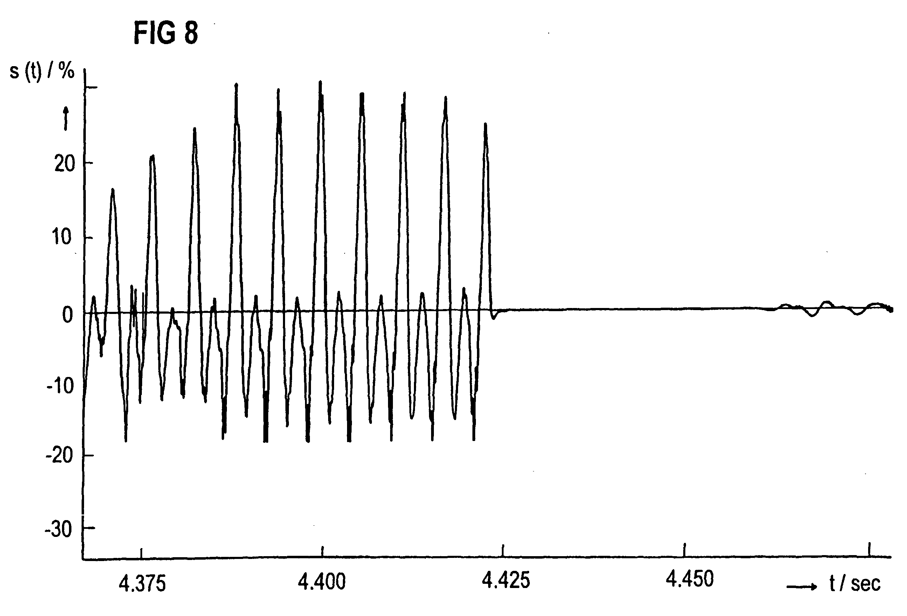

Figur 8 zeigt ein Sprachsignal, bei dem über drei (10 ms)-Perioden (Zeitbereich auf der Zeitachse zwischen 4425 ms und 4455 ms) das DECT-Sprachsignal gestört ist. Die einzelne (10 ms)-Periode entspricht der Zeitdauer eines TDMA-Zeitmultiplexrahmens bei der DECT-Schnurlossignalübertragung.

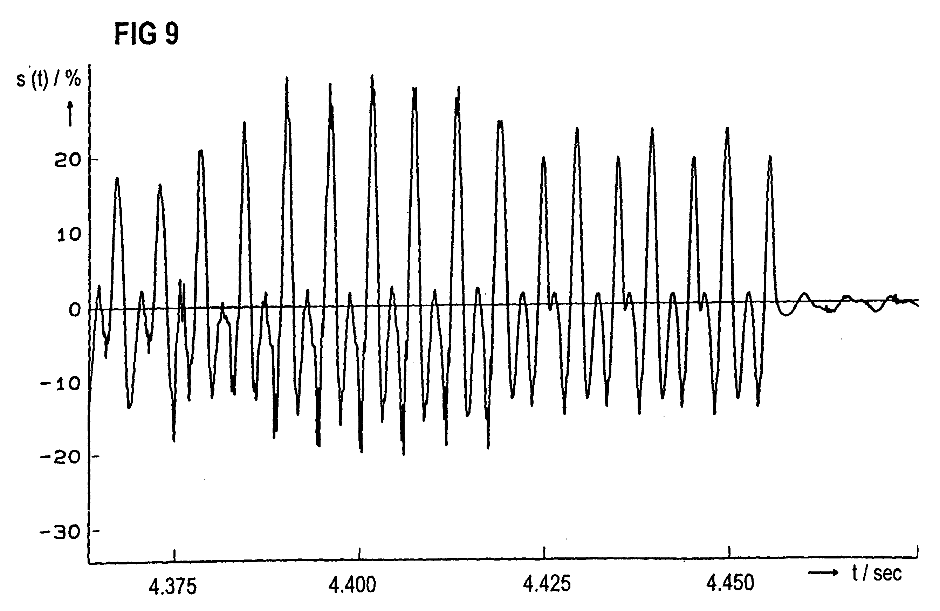

Wird das in der Figur 8 dargestellte Signal auf der in der Figur 5 dargestellten Übertragungsstrecke ÜS des Schnurlos-Mobilteils PT übertragen, so ergibt sich letztlich am Ausgang der Signalumformungseinrichtung SUE nach Figur 5 das in Figur 9 dargestellte modifizierte Sprachsignal. Der sich dabei gegenüber dem ursprünglichen Sprachsignal nach Figur 8 ergebende Unterschied ist das alleinige Resultat der Bearbeitung des ursprünglichen Sprachsignals in dem digitalen Signalprozessor DSP nach den Figuren 5 und 6. Die in dem digitalen Signalprozessor DSP aufgrund der Programmodule PM1...PM4 ablaufenden Funktionsschritte sind dabei:

（I）Das Ermitteln mindestens eines ersten fehlerhaft übertragenen Signalabschnittes des Sprachsignals. Bezüglich des Sprachsignals nach Figur 8 sind dies die drei gestörten (10 ms)-Signalabschnitte.

（II）Das Zwischenspeichern des zuletzt fehlerfrei übertragenen Signalabschnittes des Sprachsignals (Generieren eines Substitutionssignals).

（III）Das Ersetzen der drei (10 ms)-Signalabschnitte des ursprünglichen Sprachsignals durch das zwischengespeicherte Substitutionssignal.

（IV）Die Anwendung der Filterfunktion des digitalen Rekursivfilters nach Figur 6 auf das gemäß den Schritten (1) ... (3) entstandene modifizierte Sprachsignal.

Für den letzten Funktionsschritt - die Berechnung der Filterfunktion - benötigt der digitale Signalprozessor DSP lediglich den letzten zwischengespeicherten Abtastwert. Die beiden Koeffizienten $a_1$, $b_0$ brauchen dann nur noch umgesetzt zu werden.

Sind in dem Sprachsignal mehrere Signalabschnitte gestört, wie bei dem Sprachsignal nach Figur 8, so wird dieser Fehler durch entsprechendes mehrfaches Einfügen des letzten ungestört übertragenen behoben. Diese Methode ist natürlich nur begrenzt anwendbar - für (10 ms)-Signalabschnitte liegt diese Grenze in etwa (Erfahrungswerte) bei einer Zeitdauer von 50 ms. Keinen Sinn ergibt die Anwendung der Methode dann, wenn keine fehlerfreien Sprachsignale mehr empfangen werden. Eine dauernde Wiederholung des letzten gestörten Signalabschnittes würde zu einem unnatürlichen Höreindruck führen. Wird die vorstehend angegebene Grenze überschritten, so wird die beschriebene Methode dahingehend modifiziert, daß, nachdem einige gestörte Signalabschnitte durch den letzten fehlerfrei übertragenen Signalabschnitt ersetzt worden sind, das Sprachsignal anschließend mit einer Zeitkonstanten von z. B. 20 ms ausgeblendet wird. Diese Operation kann von dem digitalen Signalprozessor DSP ohne großen Rechenaufwand durchgeführt werden. Alternativ ist es bei länger anhaltenden Übertragungsfehlern auch möglich, das Digitalfilter zeitlich veränderlich auszuführen. Dies kann beispielsweise dadurch erfolgen, daß die Grenzfrequenz des Filters erniedrigt und damit die Wirkung des Filters verstärkt wird. Durch die vorstehend beschriebenen Eigenschaften des digitalen Signalprozessors DSP kann dieser unterscheiden, wieviele Signalabschnitte (DECT-Bursts) fehlerhaft übertragen wurden und dementsprechend je nach Dauer des gestörten Signalabschnittes unterschiedlich reagieren.

Bei mehrfacher Wiederholung von ein und demselben Sprachsignal bleibt es weiterhin nicht aus, daß im Signalspektrum Anteile entstehen, die der Periode des Signalabschnittes (Zeitabschnittes) entsprechen (z. B. Spektralanteile von 100 Hz bei den (10 ms)-Signalabschnitten). Diese Artefakte werden zum Teil durch das Hochpaßverhalten der weiteren Übertragungsstrecke ÜS des Schnurlos-Mobilteils PT nach den Figuren 2 und 5 gedämpft (z. B. durch den Frequenzgang in der Hörkapsel HK). Alternativ besteht aber auch die Möglichkeit, im Digitalfilter zusätzlich eine Hochpaßfilterkomponente vorzusehen. Durch diese Hochpaßfiltereigenschaft werden die angesprochenen tieffrequenten Signalanteile herausgefiltert. Dieses Vorgehen kommt der Natürlichkeit des behandelten Signals - wie Hörversuche gezeigt haben - weiter zugute. Bei der Telefonie werden bekanntermaßen die tiefen Frequenzen, die diesem Frequenzbereich entsprechen, ohnehin nicht übertragen.

**Patentansprüche**

1. Signalverarbeitungsverfahren für blockweise codierte Audiosignale eines Nachrichtensystems, bei dem

    a) ein mit dem Audiosignal korreliertes Substitutionssignal generiert und zwischengespeichert wird,
    b) ein fehlerhaft übertragener Signalabschnitt im Audiosignal ermittelt wird,
    c) der fehlerhaft übertragene Signalabschnitt des Audiosignales durch das Substitutionssignal ersetzt wird,
    d) substitutionsbedingte Artefakte des Audiosignales unterdrückt werden,

**dadurch gekennzeichnet, daß** die an den Stellen im Audiosignal, wo das Substitutionssignal wegen der unbekannten Phasenlage des fehlerhaft übertragenen Signalabschnittes unstetig in das Audiosignal eingefügt wird, entstehenden substitutionsbedingten Artefakte des Audiosignales gemäß einer Filterfunktion (H(ω)) zur Unterdrückung der Artefakte derart gefiltert werden, daß mit der durch die Filterung verbundenen Glättung der durch das Einfügen hervorgerufenen Unstetigkeitsstellen im Audiosignal das Audiosignal - nach psychoakustischen Gesichtspunkten - im wesentlichen erhalten bleibt.

2. Verfahren nach Anspruch 1, **dadurch gekennzeichnet, daß** das Audiosignal digital gefiltert wird

3. Verfahren nach Anspruch 1 oder Anspruch 2, **dadurch gekennzeichnet, daß** das Audiosignal ein Sprachsignal ist.

4. Verfahren nach einem der Ansprüche 1 bis 3, **dadurch gekennzeichnet, daß** das Substitutionssignal aus einem fehlerfrei übertragenen Signalabschnitt des Audiosignales generiert wird, der unmittelbar vor dem fehlerhaft übertragenen Signalabschnitt übertragen wird.

5. Verfahren nach einem der Ansprüche 1 bis 4, **dadurch gekennzeichnet, daß** bei im wesentlichen kontinuierlich auftretenden fehlerhaft übertragenen Signalabschnitten die Unterdrückung der substitutionsbedingten Artefakte zeitlich verändert wird.

6. Verfahren nach Anspruch 5, **dadurch gekennzeichnet, daß** bei Überschreitung einer vorgegebenen Zeitdauer der im wesentlichen kontinuierlich auftretenden fehlerhaft übertragenen Signalabschnitte das Audiosignal ausgeblendet wird.

7. Anwendung des Verfahrens nach einem der Ansprüche 1 bis 6 in einem DECT-spezifischen Schnurlos-Telekommunikationssystem mit mindestens einer Schnurlos-Basisstation und mindestens einem dieser zugeordneten Schnurlos-Mobilteil.

8. Signalverarbeitungsanordnung für blockweise codierte Audiosignale eines Nachrichtensystems mit

a) ersten Mitteln (DSP, PM1) zum Generieren und Zwischenspeichern eines mit dem Audiosignal korrelierten Substitutionssignales,

b) zweiten Mitteln (DSP, PM2) zum Erkennen eines fehlerhaft übertragenen Signalabschnittes im Audiosignal,

c) dritten Mitteln (DSP, PM3) zum Ersetzen des fehlerhaft übertragenen Signalabschnittes des Audiosignales durch das Substitutionssignal,

d) vierten Mitteln (DSP, PM4) zum Unterdrücken von substitutionsbedingten Artefakten des Audiosignales,

**dadurch gekennzeichnet, daß** die vierten Mittel (DSP, PM4) als Filter mit einer Filterfunktion ($H(\omega)$) zur Unterdrückung der Artefakte ausgebildet sind, das die an den Stellen im Audiosignal, wo das Substitutionssignal wegen der unbekannten Phasenlage des fehlerhaft übertragenen Signalabschnittes unstetig in das Audiosignal eingefügt wird, entstehenden substitutionsbedingten Artefakte des Audiosignales gemäß der Filterfunktion ($H(\omega)$) derart filtert, daß mit der durch die Filterung verbundenen Glättung der durch das Einfügen hervorgerufenen Unstetigkeitsstellen im Audiosignal das Audiosignal - nach psychoakustischen Gesichtspunkten - im wesentlichen erhalten bleibt.

9. Signalverarbeitungsanordnung nach Anspruch 8, **dadurch gekennzeichnet, daß** die vierten Mittel (DSP, PM4) als Digitalfilter ausgebildet sind.

10. Signalverarbeitungsanordnung nach Anspruch 8, **dadurch gekennzeichnet, daß** das Audiosignal als Sprachsignal ausgebildet sind.

11. Signalverarbeitungsanordnung nach einem der Ansprüche 8 bis 10, **dadurch gekennzeichnet, daß** die ersten Mittel (DSP, PM1) derart ausgebildet sind, daß das Substitutionssignal aus einem fehlerfrei übertragenen Signalabschnitt des Audiosignales generiert wird, der unmittelbar vor dem fehlerhaft übertragenen Signalabschnitt übertragen wird.

12. Signalverarbeitungsanordnung nach einem der Ansprüche 8 bis 11, **dadurch gekennzeichnet, daß** die zweiten Mittel (DSP, PM2), die dritten Mittel (DSP, PM3) und die vierten Mittel (DSP, PM4) eine Funktionseinheit derart bilden, daß bei im wesentlichen kontinuierlich auftretenden fehlerhaft übertragenen Signalabschnitten die Unterdrückung der substitutionsbedingten Artefakte zeitlich verändert wird.

13. Signalverarbeitungsanordnung nach Anspruch 12, **dadurch gekennzeichnet, daß** die aus den zweiten bis vierten Mitteln (DSP, PM2...PM4) gebildete Funktionseinheit derart ausgebildet ist, daß bei Überschreitung einer vorgegebenen Zeitdauer der im wesentlichen kontinuierlich auftretenden fehlerhaft übertragenen Signalabschnitte das Audiosignal ausgeblendet wird.

14. Signalverarbeitungsanordnung nach Anspruch 9, **dadurch gekennzeichnet, daß** das erste Mittel (DSP, PM1) als erstes Programmodul (PM1), das zweite Mittel (DSP, PM2) als zweites Programmodul (PM2), das dritte Mittel (DSP, PM3) als drittes Programmodul (PM3) und das vierte Mittel (DSP, PM4) als viertes Programmodul (PM4) eines digitalen Signalprozessors (DSP) ausgebildet sind.

15. Signalverarbeitungsanordnung nach Anspruch 9, **dadurch gekennzeichnet, daß** das Digitalfilter als Rekursivfilter erster Ordnung mit einer Tiefpaßfiltercharakteristik ausgebildet ist.

16. Signalverarbeitungsanordnung nach Anspruch 9 oder 15, **dadurch gekennzeichnet, daß** das Digitalfilter zusätzlich einen Hochpaßanteil aufweist, der durch die Wiederholfrequenz bei mehrfacher Heranziehung ein und desselben Signalabschnittes für die Substitution entstehender Artefakte unterdrückt.

17. Verwendung der Signalverarbeitungsanordnung nach einem der Ansprüche 8 bis 16 in mindestens einer Schnurlos-Basisstation (FT) und/oder mindestens einem der Schnurlos-Basisstation (FT) zugeordneten Schnurlos-Mobilteil (PT1...PT12) eines DECT-spezifischen Schnurlos-Telekommunikationssystem.

**Claims**

1. Signal processing method for block-encoded audio signals of a communication system, in which

a) a substitution signal correlated with the audio signal is generated and temporarily stored,

b) a signal section transmitted faultily in the audio signal is determined,

c) the signal section transmitted faultily in the audio signal is replaced by the substitution signal,

d) substitution-related artefacts of the audio signal are suppressed,

**characterized in that** the substitution-related artefacts of the audio signal, which are produced at the places in the audio signal where the substitution signal is inserted unsteadily into the audio signal because of the unknown phase angle of the signal section transmitted faultily, are filtered in accordance with a filter function ($H(\omega)$) for suppressing the

artefacts in such a manner that the audio signal is essentially retained - from psycho-acoustic aspects - by means of the smoothing, associated with the filtering, of the places of unsteadiness in the audio signal which are caused by the insertion.

2. Method according to Claim 1, **characterized in that** the audio signal is filtered digitally.

3. Method according to Claim 1 or 2, **characterized in that** the audio signal is a voice signal.

4. Method according to one of Claims 1 to 3, **characterized in that** the substitution signal is generated from a faultlessly transmitted signal section of the audio signal which is transmitted immediately before the signal section transmitted faultily.

5. Method according to one of Claims 1 to 4, **characterized in that** when faultily transmitted signal sections occur essentially continuously, the suppression of the substitution-related artefacts is changed in time.

6. Method according to Claim 5, **characterized in that** when a predetermined period of the faultily transmitted signal sections occurring essentially continuously is exceeded, the audio signal is blanked out.

7. Application of the method according to one of Claims 1 to 6 in a DECT-related cordless telecommunication system having at least one cordless base station and at least one cordless mobile part associated with the former.

8. Signal processing arrangement for block-encoded audio signals of a communication system comprising

   a) first means (DSP, PM1) for generating and temporarily storing a substitution signal correlated with the audio signal,
   b) second means (DSP, PM2) for detecting a faultily transmitted signal section in the audio signal,
   c) third means (DSP, PM3) for replacing the faultily transmitted signal section of the audio signal by the substitution signal,
   d) fourth means (DSP, PM4) for suppressing substitution-related artefacts of the audio signal,

   **characterized in that** the fourth means (DSP, PM4) are constructed as a filter having a filter function (H($\omega$)) for suppressing the artefacts, which filters the substitution-related artefacts of the audio signal, which are produced at the places in the audio signal where the substitution signal is inserted unsteadily into the audio signal because of the unknown phase angle of the signal section transmitted faultily, in accordance with the filter function (H($\omega$)) in such a manner that the audio signal is essentially retained - from psycho-acoustic aspects - by means of the smoothing, associated with the filtering, of the places of unsteadiness in the audio signal which are caused by the insertion.

9. Signal processing arrangement according to Claim 8, **characterized in that** the fourth means (DSP, PM4) are constructed as digital filters.

10. Signal processing arrangement according to Claim 8, **characterized in that** the audio signal is formed as a voice signal.

11. Signal processing arrangement according to one of Claims 8 to 10, **characterized in that** the first means (DSP, PM1) are constructed in such a manner that the substitution signal is generated from a faultlessly transmitted signal section of the audio signal which is transmitted immediately before the faultily transmitted signal section.

12. Signal processing arrangement according to one of Claims 8 to 11, **characterized in that** the second means (DSP, PM2), the third means (DSP, PM3) and the fourth means (DSP, PM4) form a functional unit, in such a manner that when faultily transmitted signal sections occur essentially continuously, the suppression of the substitution-related artefacts is changed in time.

13. Signal processing arrangement according to Claim 12, **characterized in that** the functional unit formed from the second to fourth means (DSP, PM2...PM4) is constructed in such a manner that when a predetermined period of the faultily transmitted signal sections occurring essentially continuously is exceeded, the audio signal is blanked out.

14. Signal processing arrangement according to Claim 9, **characterized in that** the first means (DSP, PM1) is constructed as first program module (PM1), the second means (DSP, PM2) is constructed as second program module (PM2), the third means (DSP, PM3) is constructed as third program module (PM3) and the fourth means (DSP, PM4) is constructed as fourth program module (PM4), of a digital signal processor (DSP).

15. Signal processing arrangement according to Claim 9, **characterized in that** the digital filter is constructed as a first-order recursive filter having a low-pass filter characteristic.

16. Signal processing arrangement according to Claim 9 or 15, **characterized in that** the digital filter additionally has a high-pass component which, due to the repetition rate in the case of a multiple use of one and the same signal section, suppresses artefacts produced for the substitution.

17. Use of the signal processing arrangement according to one of Claims 8 to 16 in at least one cordless base station (FT) and/or at least one cordless mobile part (PT1...PT12) allocated to the cordless base station (FT), of a DECT-related cordless telecommunication system.

**Revendications**

1. Procédé de traitement de signaux pour des signaux audio codés en bloc d'un système de communication, avec lequel

   a) un signal de substitution corrélé au signal audio est généré et stocké dans une mémoire intermédiaire,
   b) un segment de signal incorrectement transmis est détecté dans le signal audio,
   c) le segment de signal incorrectement transmis du signal audio est remplacé par le signal de substitution,
   d) les artéfacts du signal audio dus à la substitution sont supprimés,

   **caractérisé en ce que** les artéfacts du signal audio dus à la substitution et apparaissant aux endroits du signal audio où le signal de substitution est inséré dans le signal audio, cette insertion étant discontinue à cause de la position de phase inconnue du segment de signal incorrectement transmis, sont filtrés selon une fonction de filtrage ($H(\omega)$) servant à supprimer les artéfacts, de manière à ce que, grâce au lissage des points de discontinuité provoqués dans le signal audio par l'insertion, lissage qui est lié au filtrage, le signal audio soit essentiellement conservé - du point de vue psycho-acoustique.

2. Procédé selon la revendication 1, **caractérisé en ce que** le signal audio fait l'objet d'un filtrage numérique.

3. Procédé selon la revendication 1 ou la revendication 2, **caractérisé en ce que** le signal audio est un signal vocal.

4. Procédé selon l'une des revendications 1 à 3, **caractérisé en ce que** le signal de substitution est généré à partir d'un segment de signal correctement transmis du signal audio, qui est transmis juste avant le segment de signal incorrectement transmis.

5. Procédé selon l'une des revendications 1 à 4, **caractérisé en ce que**, lorsque des segments de signal incorrectement transmis surviennent de manière essentiellement continue, la suppression des artéfacts dus à la substitution est modifiée dans le temps.

6. Procédé selon la revendication 5, **caractérisé en ce que**, en cas de dépassement d'une période de temps prédéfinie pour les segments de signal dont la transmission incorrecte se fait de manière essentiellement continue, le signal audio est supprimé.

7. Utilisation du procédé selon l'une des revendications 1 à 6 dans un système de télécommunication sans fil spécifique DECT comprenant au moins une station de base sans fil et au moins une partie mobile sans fil associée à celle-ci.

8. Système de traitement de signaux pour des signaux audio codés en bloc d'un système de communication, comprenant

   a) des premiers moyens (DSP, PM1) servant à générer et stocker dans une mémoire intermédiaire un signal de substitution corrélé au signal audio,
   b) des deuxièmes moyens (DSP, PM2) servant à détecter un segment de signal incorrectement transmis dans le signal audio,
   c) des troisièmes moyens (DSP, PM3) servant à remplacer le segment de signal incorrectement transmis du signal audio par le signal de substitution,
   d) des quatrièmes moyens (DSP, PM4) servant à supprimer les artéfacts du signal audio dus à la substitution,

   **caractérisé en ce que** les quatrièmes moyens (DSP, PM4) sont exécutés en tant que filtre possédant une fonction de filtrage ($H(\omega)$) pour la suppression des artéfacts, qui filtre, selon la fonction de filtrage ($H(\omega)$), les artéfacts du signal audio dus à la substitution et apparaissant aux endroits du signal audio où le signal de substitution est inséré dans le signal audio, cette insertion étant discontinue à cause de la position de phase inconnue du segment de signal incorrectement transmis, de manière à ce que, grâce au lissage des points de discontinuité provoqués dans le signal audio par l'insertion, lissage qui est lié au filtrage, le signal audio soit essentiellement conservé - du point de vue psycho-acoustique.

9. Système de traitement de signaux selon la revendication 8, **caractérisé en ce que** les quatrièmes moyens (DSP, PM4) sont exécutés en tant que filtre numérique.

**10.** Système de traitement de signaux selon la revendication 8, **caractérisé en ce que** le signal audio est un signal vocal.

**11.** Système de traitement de signaux selon l'une des revendications 8 à 10, **caractérisé en ce que** les premiers moyens (DSP, PM1) sont exécutés de manière à ce que le signal de substitution soit généré à partir d'un segment de signal correctement transmis du signal audio, qui est transmis juste avant le segment de signal incorrectement transmis.

**12.** Système de traitement de signaux selon l'une des revendications 8 à 11, **caractérisé en ce que** les deuxièmes moyens (DSP, PM2), les troisièmes moyens (DSP, PM3) et les quatrièmes moyens (DSP, PM4) forment une unité fonctionnelle, de manière à ce que, lorsque des segments de signal incorrectement transmis surviennent de manière essentiellement continue, la suppression des artéfacts dus à la substitution est modifiée dans le temps.

**13.** Système de traitement de signaux selon la revendication 12, **caractérisé en ce que** l'unité fonctionnelle formée par les deuxièmes, troisièmes et quatrièmes moyens (DSP, PM2, ..., PM4) est exécutée de manière à ce que, en cas de dépassement d'une période de temps prédéfinie pour les segments de signal dont la transmission incorrecte se fait de manière essentiellement continue, le signal audio soit supprimé.

**14.** Système de traitement de signaux selon la revendication 9, **caractérisé en ce que** le premier moyen (DSP, PM1) est exécuté en tant que premier module de programme (PM1), le deuxième moyen (DSP, PM2) en tant que deuxième module de programme (PM2), le troisième moyen (DSP, PM3) en tant que troisième module de programme (PM3) et le quatrième moyen (DSP, PM4) en tant que quatrième module de programme (PM4), d'un processeur de signaux numériques (DSP).

**15.** Système de traitement de signaux selon la revendication 9, **caractérisé en ce que** le filtre numérique est exécuté en tant que filtre récursif de premier ordre pourvu d'une caractéristique de filtre passe-bas.

**16.** Système de traitement de signaux selon la revendication 9 ou 15, **caractérisé en ce que** le filtre numérique comprend, en plus, une partie passe-haut qui supprime les artefacts produits pair la fréquence de répétition lors de l'utilisation multiple d'un seul et même segment de signal pour la substitution.

**17.** Utilisation d'un système de traitement de signaux selon l'une des revendications 8 à 16 dans, au moins une station de base sans fil (FT) et/ou au moins une partie mobile sans fil (PT1 ... PT12) associée à la station de base sans fil (FT) d'un système de télécommunication sans fil spécifique DECT.

## FIG 1

**FIG 2**

EP 0 775 360 B1

FIG 3

FIG 4

EP 0 775 360 B1

**FIG 5**

ÜS

ANT — SENDER/EMPFÄNGER (FKT) — BURST MODE CONTROLLER (BMC) — DIGITALER SIGNAL-PROZESSOR (DSP) PM1 PM2 PM3 PM4 — CODEC AD/DA-WANDLER (SUE) — HK, MIK

LCD-DISPLAY, TASTATUR — MIKROCONTROLLER (MIC) — STROMVERSORGUNG

EP 0 775 360 B1

# FIG 6

FIG 7

EP 0 775 360 B1

FIG 8

EP 0 775 360 B1

FIG 9